# EUROPEAN PATENT SPECIFICATION

(11) **EP 4 152 567 B1**
(45) Date of publication and mention of the grant of the patent: **17.04.2024**
(21) Application number: 22182505.2
(22) Date of filing: 01.07.2022
(51) Int. Cl.: H02K 1/20, H02K 5/20, H02K 9/06, H02K 9/10, H02K 9/14, H02K 1/32

(54) **ROTARY ELECTRIC MACHINE**
ELEKTRISCHE DREHMASCHINE
MACHINE TOURNANTE ÉLECTRIQUE

(30) Priority: 21.09.2021 JP 2021153136
(43) Date of publication of application: 22.03.2023
(73) Proprietor: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: NAITO, Katsuhito, 212-0013 Kanagawa (JP); KOYAMA, Taihei, 212-0013 Kanagawa (JP); YASUMURO, Kei, 212-0013 Kanagawa (JP); HASEBE, Toshio, 212-0013 Kanagawa (JP); YAMAWAKI, Kazunori, 183-8511 Tokyo (JP)
(74) Representative: AWA Sweden AB

(56) References cited:
- JP-A- 2017 201 878
- US-A1- 2004 150 270
- US-A1- 2016 233 743

## Description

### FIELD

Embodiments described herein relate generally to a rotary electric machine.

### BACKGROUND

In recent years, permanent magnetic rotary electric machines in which permanent magnets are arranged in the magnetic poles of a rotor have been proposed. Furthermore, miniaturization and higher output are demanded for vehicle driving rotary electric machines. Higher output may cause increased temperature in stator coils and permanent magnets. Thus, improved cooling effect for the rotary electric machines is required,

JP2017201878 A, US2016/233743 A1, US2004/150270 A1 disclose electric motors comprising two separate cooling circuits.

### BRIEF DESCRIPTION OF THE DRAWINGS

FIG. 1 is a perspective view of an exterior of a rotary electric machine of an embodiment.
FIG. 2 is a perspective view of the rotary electric machine in a disassembled manner, in which a first bracket and a cover plate are removed.
FIG. 3 is a cross-sectional view of the rotary electric machine, taken along line A-A of FIG. 1.
FIG. 4 is a cross-sectional view of a first bracket part, taken along line C-C of FIG. 3.
FIG. 5 is a cross-sectional view of the first bracket part, taken along line D-D of FIG. 3.
FIG. 6 is a cross-sectional view of the rotary electric machine, taken along line B-B of FIG. 3.
FIG. 7 is a partial and vertical cross-sectional view of the rotary electric machine.
FIG. 8 is a schematic perspective view of an external air flow path and an internal air flow path of the first bracket.
FIG. 9 is a perspective including a cross-section of the flow path formation part, taken along line F-F of FIG. 8.
FIG. 10 is a perspective including a cross-section of the flow path formation part, taken along line G-G of FIG. 8.
FIG. 11 is a perspective including a cross-section of the flow path formation part, taken along line H-H of FIG. 8.
FIG. 12 is a cross-sectional view of a second bracket part, taken along line E-E of FIG. 3.

### DETAILED DESCRIPTION

Hereinafter, a rotary electric machine of the embodiment will be explained with reference to the accompanying drawings.

In general, according to one embodiment, a rotary electric machine comprises: a stator including a cylindrical stator core with a first end surface positioned at one end of an axial direction and a second end surface positioned at the other end of the axial direction, and an outer peripheral surface, a stator coil attached to the stator core, and a first flow path formation part provided on an outer periphery of the stator core, forming a first flow path extending from one end of the stator core to the other end thereof in the axial direction and a second flow path positioned outside the first flow path in a radial direction of the stator core while extending from one end of the stator core to the other end thereof in the axial direction; a first bracket including an annular peripheral wall with an opening end opposed to the first end surface, a bottom wall opposed to the first end surface with a gap therebetween, and a second flow path formation part which is formed as a part of the peripheral wall; and a second bracket including an annular peripheral wall with an opening end opposed to the second end surface, and a bottom wall opposed to the second end surface with a gap therebetween. The second flow path formation part of the first bracket comprises: a first end wall extending from the opening end of the peripheral wall in a radial direction and having a width in a circumferential direction; a pair of first side walls extending each of one and other ends of the first end wall in the circumferential direction to the bottom wall in the axial direction while being installed standing in the radial direction and opposed to each other in the circumferential direction with a gap therebetween; a first bottom wall positioned between the pair of first side walls, extending from an end of the first end wall in the opening end side to the bottom wall in the axial direction, and having a first width in the circumferential direction; a first partition wall positioned between the pair of first side walls, extending from the first end wall to the bottom wall in the axial direction, having a first width in the circumferential direction, and opposed to the first bottom wall with a gap therebetween in the radial direction; a first roof wall positioned between the pair of first side walls, extending from an end of extension side of the first end wall to the bottom wall in the axial direction, having a first width in the circumferential direction, and opposed to the first partition wall with a gap therebetween in the radial direction; a first outflow port formed in the first end wall, having a predetermined width in the circumferential direction, and opposed to one end of the first flow path; a second outflow port formed in the first end wall, having a predetermined width in the circumferential direction, positioned outside the radial direction with respect to the first outflow port, and opposed to one end of the second flow path; a first inflow port formed in the first bottom wall, positioned to be adjacent to the bottom wall, and having a first width in the circumferential direction; a second inflow port formed in the first bottom wall, positioned in the first end wall side with respect to the first inflow port, and having a second width in the circumferential direction, which is smaller than the first width; a through port formed in the first partition wall, opposed to the second inflow port, and having a third width in the circumferential direction, which is smaller than the first width; and a cylindrical second partition wall positioned between the first bottom wall and the first partition wall, and having one end connected to the first bottom wall and positioned around the second inflow port and the other end connected to the first partition wall and positioned around the through port. An external air flow path, communicating the first inflow port with the first outflow port, is defined by the first bottom wall, the first partition wall, the pair of first side walls, and the second partition wall, and an internal air flow path, communicating the second inflow port with the second outflow port, is defined by the first partition wall, the first roof wall, the pair of first side walls, and the second partition wall.

Note that the disclosure is merely an example, and proper changes within the scope of the invention, which are easily conceivable by a skilled person, are included in the scope of the invention as a matter of course. Throughout the embodiment, common structures and elements are referred to as the same reference numbers, and explanation considered redundant will be omitted. In addition, each drawing is a schematic diagram used for better understanding of the embodiment, and in some cases, the widths, thicknesses, shapes, etc., of the respective elements may be difference from the actual machine, which will of course be arbitrarily designed and changed in consideration of the following explanation and publically-known arts.

### (Embodiment)

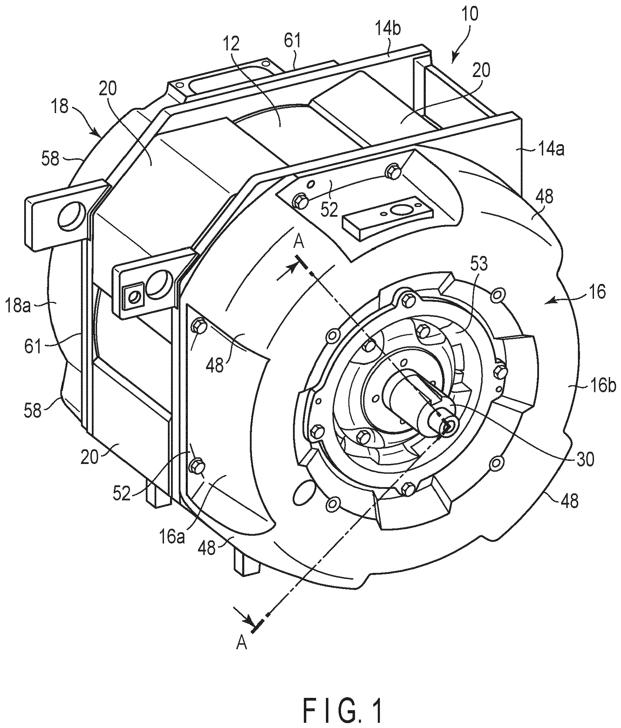

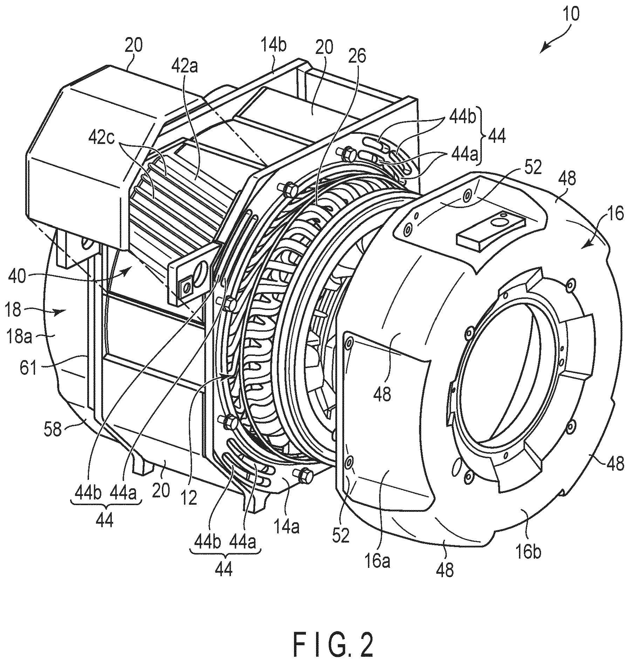

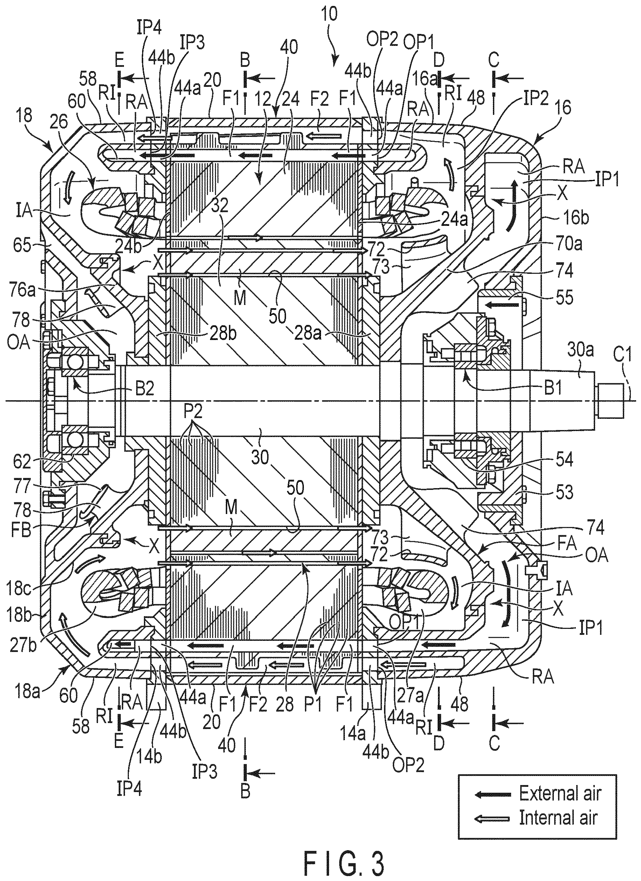

FIG. 1 is a perspective view illustrating the exterior of a rotary electric machine of the embodiment, FIG. 2 is a perspective view of the rotary electric machine in a disassembled manner, in which a first bracket and a cover plate are removed, and FIG. 3 is a cross-sectional view of the rotary electric machine, taken along line A-A of FIG. 1. In the following explanation, a direction of the central axis C1 of the rotating electric machine will be referred to as axial direction, a direction orthogonal to the central axis C1 as radial direction, and a direction circumferential around the central axis C1 as circumferential direction.

As in FIGS. 1 and 2, the rotary electric machine 10 is configured as a so-called totally enclosed rotary electric machine. The rotary electric machine 10 includes a stator 12, a first core holder 14a fixed to one end surface of the stator 12 in the axial direction, a second core holder 14b fixed to the other end surface of the stator 12 in the axial direction, a bowl-shaped first bracket 16 which is fixed to the first core holder 14a and covers the one end side (drive side) of stator 12, a bowl-shaped second bracket 18 which is fixed to the second core holder 14b and covers the other end (non-drive side) of the stator 12, and a plurality of cover plates, e.g., four cover plates 20, fixed to the outer periphery of the stator 12. The first bracket 16 and second bracket 18, together with the stator 12, constitute an internally sealed case (outer covering). The first bracket 16 and second bracket 18 are fitted with bearing housings which contain bearings B1 and B2, which will be described later. In the case, a rotor 28, which will be described later, is provided in the case to be rotatable with respect to the stator 12. The rotation shaft of the rotor is supported by bearings at both ends in the axial direction to be rotatable around the central axis C1.

As in FIG. 3, the stator 12 includes an approximately annular or cylindrical stator core 24 and a stator coil 26 wound around the stator core. The stator core 24 includes a number of annular metal sheets (electromagnetic steel sheets) P1 formed of a magnetic material such as silicon steel sheet, layered one after another. The stator coil 26 is arranged in a plurality of slots in the stator core 24, and includes coil ends 27a and 27b extending from one end surface 24a and the other end surface 24b in the axial direction of the stator core 24. The first core holder 14a and the second core holder 14b are superimposed on the axial one end surface and the other end surface of the stator core 24 in the axial direction, holding the stator core 24 from both sides in the axial direction.

The first bracket 16 is formed in, for example, a bowl shape of aluminum or an aluminum alloy, and integrally includes a roughly cylindrical peripheral wall 16a and a disk-shaped bottom wall 16b that closes one end of the peripheral wall 16a. The first bracket 16 secures an end of opening side of the peripheral wall 16a to the first core holder 14a to be coaxially aligned with the central axis C1 and covers the drive side of the stator 12. The bottom wall 16b is opposed to one end surface of the stator core 24 with an axial gap therebetween. An annular first bearing bracket 53 is bolted to the center of the bottom wall 16b. A first bearing housing 54 with a built-in first bearing B1 is fastened to the center of the first bearing bracket 53. Around the first bearing B1, the first bearing bracket 53 is provided with a plurality of intake ports 55.

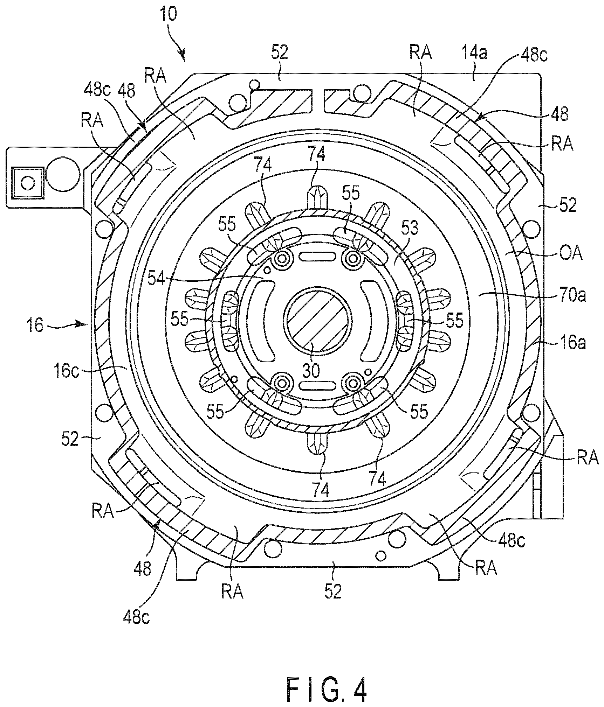

FIG. 4 is a cross-sectional view of the first bracket 16, taken along line C-C of FIG. 3. As in the figure, a plurality of intake ports 55 are provided with the first bearing bracket 53. The intake ports 55 are located around the rotation shaft 30 and are arranged at regular intervals in the circumferential direction.

As in FIG. 3, the second bracket 18 is formed in, for example, a bowl shape of aluminum or an aluminum alloy and integrally includes a nearly cylindrical peripheral wall 18a and a disk-shaped bottom wall 18b that close one end of the peripheral wall 18a, and an annular partition wall 18c provided with the inner surface side of the bottom wall 18b to be opposed to the peripheral wall 18a with a gap therebetween. The second bracket 18 secures an end in the opening side of the peripheral wall 18a to the second core holder 14b to be coaxially aligned with the central axis C1 and covers the drive side of the stator 12. A second bearing housing 62 with a built-in second bearing B2 is fastened to the center of the bottom wall 18b. Around the second bearing B2, the bottom wall 18b is provided with a plurality of intake ports 55.

The rotor 28 includes a rotation shaft 30, rotor core 32, and a plurality of permanent magnets M embedded in the rotor core 32. The rotation shaft 30 is arranged in the case coaxially with the central axis C1, and is rotatably supported by first bearing B1 and the second bearing B2 at one end and the other end in the axial direction, respectively. One end of the rotation shaft 30 extends out of the machine through the bearing B1 and constitutes the drive end 30a.

The rotor core 32 includes a number of annular metal sheets (electromagnetic steel sheets) P2 formed of magnetic material such as silicon steel sheet, layered in the axial direction, and is formed in an approximately cylindrical shape. The rotor core 32 is attached to approximately the center of the rotation shaft 30 in the axial direction, and is formed inside the stator core 24 to be coaxially with the center axis C1. The outer peripheral surface of the rotor core 32 is opposed to the inner peripheral surface of the stator core 24 with a gap (air gap) therebetween. An axial length of the rotor core 32 is approximately equal to the axial length of the stator core 24, and the rotor core 32 is opposed to the stator core 24 along its entire length.

A plurality of magnet embedded holes 50 are formed in the outer periphery of the rotor core 32, each extending in the axial direction and arranged at intervals in the circumferential direction. The magnet embedded holes 50 are formed through the rotor core 32 in the axial direction and open on both end surfaces of the rotor core 32. The permanent magnet M extends over the rotor core 32 along its entire length.

The rotor core 32 is supported from both end surfaces in the axial direction by a pair of disk-shaped core holders 28a and 28b attached to the rotation shaft 30. The core holders 28a and 28b are formed in an annular shape, and outer diameters thereof are slightly smaller than the outer diameter of the rotor core 32.

Between the rotor core 32 and the first bearing B1, a first fan FA is attached to the rotation shaft 30 and can rotate freely together with the rotation shaft 30. A second fan FB is attached to the rotation shaft 30 between the rotor core 32 and the second bearing B2, and can rotate freely together with the rotation shaft 30.

The first fan FA is configured as a centrifugal type fan and generates airflow in a radial direction by rotation. The first fan FA includes a fan main body 70a in a trumpet or fan shape. The fan main body 70a is fixed to the rotation shaft 30 and extends from the rotor core 32 side toward the first bracket 16 and widening to the outer periphery side in the radial direction. The outer peripheral edge of the fan main body 70a is located inside the peripheral wall 16a of the first bracket 16, and is arranged aside with a part of the peripheral wall 16a in the radial direction. The outer peripheral edges are in engagement with the inner circumference of the peripheral wall 16a with a circular micro gap therebetween. The circular micro gaps are formed in an abbreviated two-step structure with concavo-convex shapes, forming a labyrinth structure part X.

The inner space of the first bracket 16 is defined by the fan main body 70a into an outside space OA defined between the first fan FA and the bottom wall 16b and an inside space IA defined between the first fan FA and the stator 12. The intake port 55 of the first bracket 16 is connected to the outside space OA.

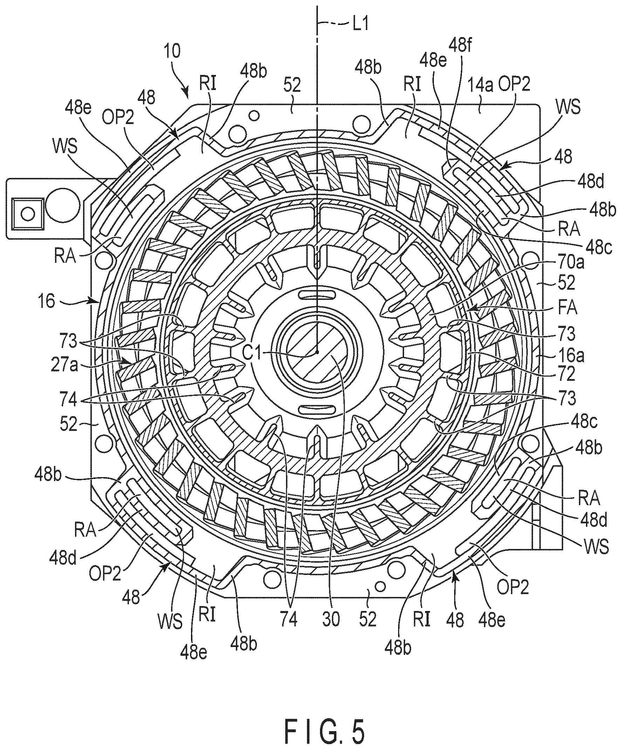

FIG. 5 is a cross-sectional view of the first bracket 16 part, taken along line D-D of FIG. 3. As in the figure, the first fan FA includes an annular inner shroud 72 disposed to be opposed to the inner surface of the fan main body 70a in the stator core 24 side with a gap therebetween, a plurality of inner blades 73 provided between the inner surface of the fan main body 70a and the inner shroud 72, and a plurality of outer blades 74 provided with the outer surface of the fan main body 70a in the first bearing B1 side. The inner blades 73 are provided at regular intervals in the circumferential direction and are located in an inside space IA. The outer blades 74 are provided at regular intervals in the circumferential direction and are located in an outside space OA.

As in FIG. 3, the second fan FB is configured as a centrifugal type fan and generates airflow in the radial direction. The second fan FB includes a fan main body 76a in a trumpet or fan shape. The fan main body 76a is fixed to the rotation shaft 30 through the core holder 28b, and is directed from the rotor core 32 side to the bottom wall 18b of the second bracket 18, and extends widening to the outer peripheral side in the radial direction. The outer peripheral edge of the fan main body 76a is located inside the partition wall 18c of the second bracket 18, and arranged aside with the partition wall 18c in the radial direction. The outer peripheral edges are engaged with the inner circumference of the partition wall 18c with a circular micro gap therebetween. The circular micro gaps are formed in an abbreviated two-step structure with concavo-convex shapes, forming a labyrinth structure part X.

The inner space of the second bracket 18 is defined by the fan main body 76a and the partition wall 18c into an outside space OA defined between the second fan FB and the bottom wall 18b and an inside space IA defined between the first fan FB and the stator 12. The intake port 65 and a discharge port of the second bracket 18 are connected to the outside space OA.

The second fan FB includes an annular outer shroud 77 arranged opposite to the outer surface of the fan main body 76a in the second bearing B2 side with a gap therebetween, and a plurality of outer blades 78 provided between the fan main body 76a and the outer shroud 77. The outer blades 78 are provided at regular intervals in the circumferential direction and are located in the outside space OA.

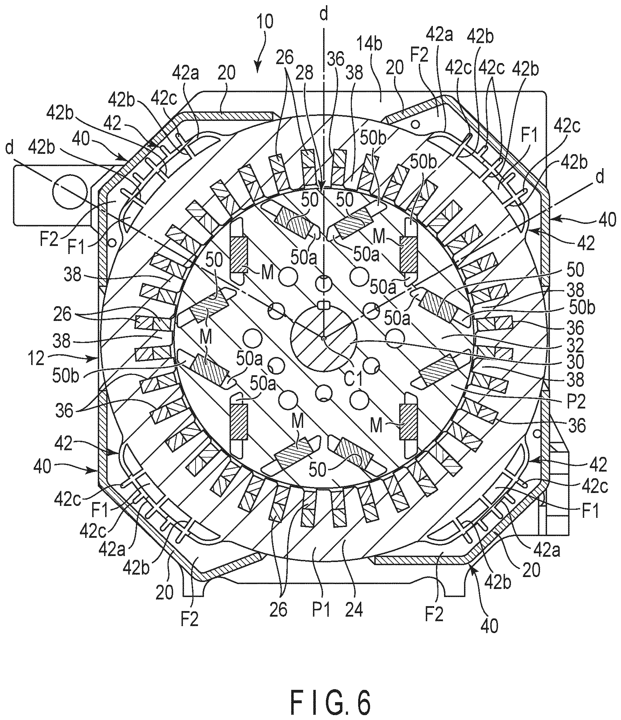

FIG. 6 is a cross-sectional view of the stator and the rotor, taken along line B-B of FIG. 3.

As in FIG. 6, in the present embodiment, the rotor 28 is structured with multiple poles, for example, six poles. In the rotor core 32, two permanent magnets M are embedded in each pole. When the axis extending radially through the center axis C1 and the circumferential pole center is given the pole center axis (d-axis), magnet embedded holes 50 are provided on both sides of each d-axis in the circumferential direction. The magnet embedded holes 50 have an approximately rectangular cross-section corresponding to the shape of the permanent magnets M, and are each inclined with respect to the d-axis. The two permanent magnets M are each loaded and positioned in the magnet embedded holes 50. The permanent magnets M may be fixed to the rotor core 32 by, for example, adhesive.

The permanent magnets M are formed, for example, as elongated flat plates with a rectangular cross-section, and are arranged over the entire axial length of the rotor core 32. Each of the magnet embedded holes 50 has an approximately rectangular-shaped loading area in which the permanent magnet M is loaded, an inner periphery void 50a which expands from one end of the loading area in the longitudinal direction to the s-axis side, and an outer periphery void 50b which expands from the other end of the loading area in the longitudinal direction to the outer peripheral surface side. The inner peripheral ends of the two magnet embedded holes 50 and the two permanent magnets M are adjacent and opposed to each other across the d-axis, and the outer peripheral ends are distant from the d-axis in the circumferential direction to be located near the outer peripheral surface of the rotor core 32, and are arranged in an approximately V-shape. As described below, cooling air can be circulated through the inner peripheral void 50a and outer peripheral void 50b of each magnet embedded hole 50.

A plurality of slots 36 are formed in the inner periphery of the stator core 24. The slots 36 are arranged at regular intervals in the circumferential direction. Each slot 36 is open to the inner peripheral surface of stator core 24 and extends radially from the inner peripheral surface. Each slot 36 extends over the entire axial length of stator core 24. By forming a plurality of slots 36, the inner periphery of stator core 24 structures a plurality of teeth facing the rotor 28.

The stator coil 26 includes, for example, a plurality of flat rectangular conductors. Two stator coils 26 are arranged in each slot 36 as a set and wound around the teeth 38. When current is applied to the stator coil 26, a predetermined chain crossed magnetic flux is formed in the stator 12 (teeth 38).

In the present embodiment, the stator 12 includes flow path formation parts (first flow path formation part) 40 arranged in multiple positions of the outer periphery thereof, for example, four positions. The four flow path formation parts 40 are arranged at regular intervals in the circumferential direction, for example, 90 degrees apart. Each flow path formation part 40 includes a grid-shaped rib 42 extending radially outward from the outer periphery of each electromagnetic steel plate P1 of the stator core 24. The rib 42 includes an approximately arc-shaped main rib 42a. The main rib 42a extends radially outward from one location in the outer peripheral edge of the electromagnetic steel plate P1 to other location distant therefrom in the circumferential direction, and is opposed to the outer peripheral edge with a gap therebetween. A first flow path F1 is defined between the main rib 42a and the outer peripheral edge of the electromagnetic steel plate P1. Furthermore, the rib 42 includes a plurality of first straightening ribs 42b each extending radially from the outer peripheral edge of the electromagnetic steel plate P1 to the main rib 42a and defining the first flow path F1 into multiple parts in the circumferential direction and a plurality of second straightening ribs 42c each extending radially outwardly from the outer peripheral edge of the main rib 42a.

By layering a large number of electromagnetic steel plates P1 in a concentric manner, the ribs 42 are arranged side by side in the axial direction. As a result, a first flow path F1 extending continuously in the axial direction is formed between the rib 42 and the outer peripheral surface of the stator core 24. The first straightening rib 42b is located within the first flow path F1 and can function as a straightening plate.

The flow path formation part 40 includes a cover plate 20. The cover plate 20 is arranged over the ribs 42, and both edges of the cover plate 20 are fixed, e.g., welded, to the outer periphery of the stator core 24. A pair of opposed edges of the cover plate 20 are each welded to the first core holder 14a and the second core holder 14b. The outer peripheral surface of the stator core 24, the outer peripheral surface of the main rib 42a, and the inner surface of the cover plate 20 define a second flow path F2. The second flow path F2 extends continuously in the axial direction from one end of the stator core 24 in the axial direction to the other end thereof in the axial direction. The second straightening rib 42c is located within the second flow path F2 and can function as a straightening plate.

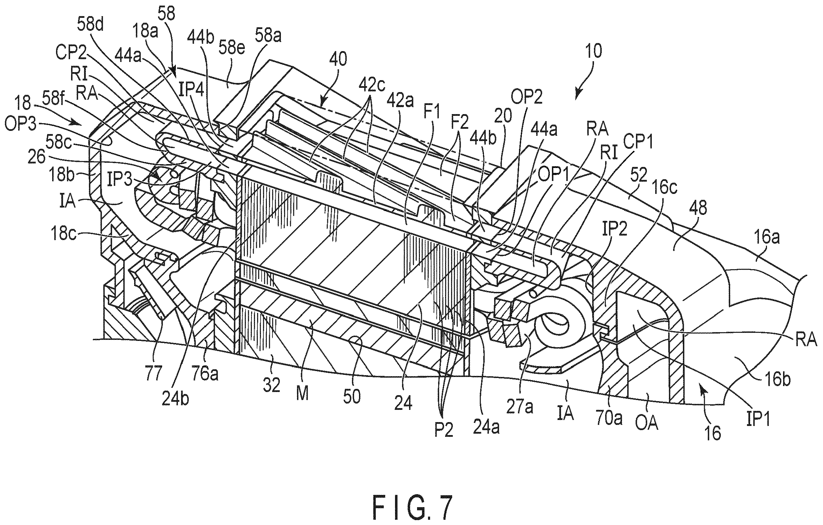

FIG. 7 is a perspective view of a partial vertical cross-section of the rotary electric machine. As in FIG. 7, in the present embodiment, a number of electromagnetic steel plates P2 structuring the stator core 24 are layered in a manner that they are sequentially shifted by several degrees in the direction of rotation around the central axis line C1. As a result, the first flow path F1 of each flow path formation part 40 extends inclining at a predetermined angle with respect to the axial direction. Similarly, a plurality of second straightening ribs 42c in the second flow path F2 extend inclining at a predetermined angle with respect to the axial direction.

As in FIG. 2, the first core holder 14a of the stator 12 and the second core holder 14b of the stator 12 each include through ports 44 provided at four locations in the outer periphery. The four through ports 44 are located at regular intervals, e.g., 90 degrees apart, in the circumferential direction. Each through port 44 includes a first through port 44a and a second through port 44b, each of which comprises a circumferentially extending arcuate long hole. The first and second through ports 44a and 44b are aligned in the radial direction, and for example, the first through port 44a is located in the inner side of the radial direction and the second through port 44b is located in the outer side of the radial direction. The first through port 44a and the second through port 44b may be divided into a plurality of through ports in the circumferential direction, respectively.

As in FIGS. 3 and 7, with the first core holder 14a and the second core holder 14b being attached to the end surface of the stator core 24, the first through port 44a of the first core holder 14a is positioned to be opposed to one end of the corresponding first flow path F1 of the stator 12 and is connected to the first flow path F1. The second through port 44b of the first core holder 14a is positioned to be opposed to one end of the corresponding second flow path F2 of the stator 12 and is connected to the second flow path F2. Similarly, the first through port 44a of the second core holder 14b is positioned to be opposed to the other end of the corresponding first flow path F1 of the stator 12 and is connected to the the first flow path F1. The second through port 44b of the second core holder 14b is positioned to be opposed to the other end of the corresponding second flow path F2 of the stator 12 and is connected to the the second flow path F2.

As in FIG. 1, the first bracket 16 includes a plurality of flow path formation convexities (second flow path formation part) 48 of predetermined width and predetermined thickness at a plurality of locations, four in this example, on the peripheral wall 16a. The four flow path formation convexities 48 are located at regular intervals in the circumferential direction, e.g., 90 degrees apart. Each flow path formation convexity 48 extends axially from the opening end of peripheral wall 16a to the bottom wall 16b and having a predetermined width in the circumferential direction. Each flow path formation convexity 48 is opposed to the flow path formation part 40 of the stator 12. In the flow path formation convexity 48, an external air flow path and an internal air flow path, which will be described later, are defined individually.

A flange 52 is provided at each of the opening end of peripheral wall 16a between two adjacent flow path forming convexities 48. The outer diameter and outer shape of the peripheral wall 16a including the flow path formation convexity 48 and the flange 52 substantially match the outer diameter and outer shape of the first core holder 14a. The inner diameter of peripheral wall 16a is slightly smaller than the outer diameter of the stator core 24 (outer diameter not including flow path formation part 40).

The bracket 16 is fixed to the first core holder 14a in a position where the four flow path formation convexities 48 are each opposed to the through ports 44 of the first core holder 14a. In this example, the flange 52 is fastened to the first core holder 14a by bolts.

The second bracket 18 includes a plurality of flow path formation convexities (third flow path formation part) 58 of predetermined width and predetermined thickness at a plurality of locations, four in this example, on the peripheral wall 18a. The four flow path formation convexities 58 are located at regular intervals in the circumferential direction, e.g., 90 degrees apart. Each flow path formation convexity 58 extends from one end of the peripheral wall 18a in the axial direction to the other end thereof and has a predetermined width in the circumferential direction. In the flow path formation convexity 58, an external air flow path and an internal air flow path, which will be described later, are defined individually.

A flange 61 is provided at each of the opening end of the peripheral wall 18a between two adjacent flow path formation convexities 58. The outer diameter and outer shape of the peripheral wall 18a including the flow path formation convexity 58 and the flange 61 substantially match the outer diameter and outer shape of the second core holder 14b. The inner diameter of peripheral wall 18a is slightly smaller than the outer diameter of the stator core 24 (outer diameter not including flow path formation part 40).

The second bracket 18 is fixed to the second core holder 14a in a position where the four flow path forming convexities 58 face the through ports 44 of the second core holder 14b, respectively. In this example, the flange 61 is fastened to the second core holder 14b by bolts.

Now, the structure of the flow path formation convexity 48 of the first bracket 16 will be described.

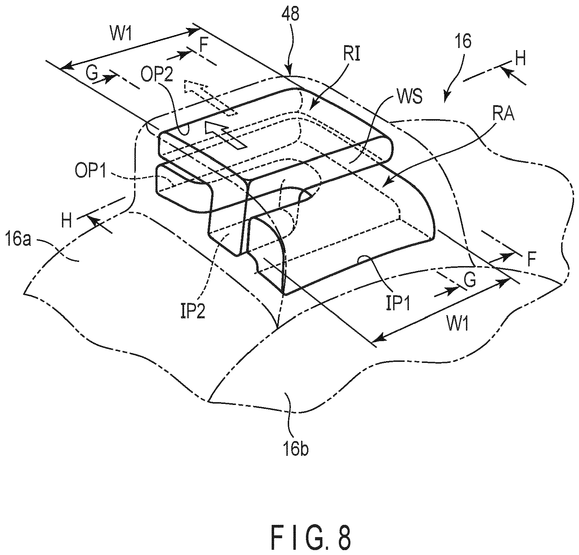

FIG. 8 is a perspective view of the flow path formation convexity 48, in which the external air flow path and the internal air flow path formed in the flow path formation convexity 48 of the first bracket are schematically shown. As in the figure, a first external air flow path RA and a first internal air flow path RI are formed in the flow path formation convexity 48. The flow path formation convexity 48 includes a first inflow port IP1 opening to the outside space OA of the first bracket 16 and a first outflow port OP1 opposed to one end of the first flow path F1 of the stator 12. The first external air flow path RA connects the first inflow port IP1 and the first outflow port OP1. The first external air flow path RA extends from the first inflow port IP1 to the first outflow port OP1 in the axial direction. The first external air flow path RA has a first width W1 in the circumferential direction. The first external air flow path RA has a narrow portion WS in the axial direction, the width of which is narrower than the other portions in the circumferential direction.

The flow path formation convexity includes a second inflow port IP2 opening to the inside space IA of the first bracket 16 and a second outflow port OP2 opposed to one end of the second flow path F2 of the stator 12. The second inflow port IP2 is positioned aside with the narrow portion WS of the first external air flow path RA in the circumferential direction. The second outflow portOP2 is located radially outward from the first outflow port OP1. The first internal air flow path RI connects the second inflow port IP2 and the second outflow port OP2. The first internal air flow path RI extends radially outward across the first external air flow path RA from the second inflow port IP2, and then extends axially to reach the second outflow port OP2. The axially extending portion of the first internal air flow path RI has a circumferential first width W1 and located radially outwardly with respect to the first external air flow path RA.

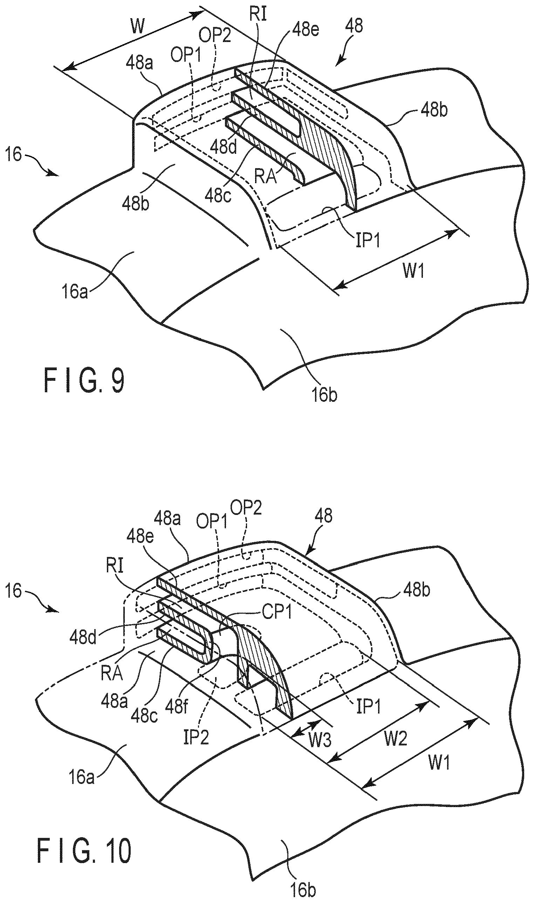

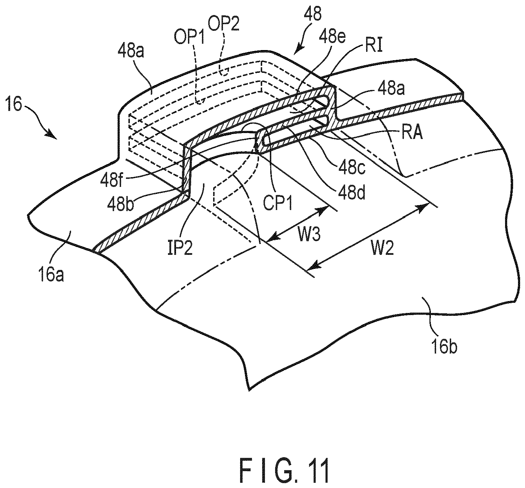

Next, the structure of the walls forming the first external air flow path RA and the first internal air flow path RI will be described. FIG. 9 is a perspective view illustrating a cross-section of the flow path formation convexity, taken along line F-F of FIG. 8, FIG. 10 is a perspective view illustrating a cross-section of the flow path formation convexity, taken along line G-G 0f FIG. 8, and FIG. 11 is a perspective view illustrating the flow path formation convexity, taken along line H-H of FIG. 6.

As in FIG. 9, the flow path formation convexity 48 includes a first end wall 48a extending radially from the opening end of the peripheral wall 16a and having a circumferential width W, a pair of first side walls 48b each radially stand on the peripheral wall 16a while axially extending from one end and the other end of the first end wall 48a in the circumferential direction to the bottom wall 16b and being opposed to each other in the circumferential direction with a first width W1 interposed therebetween, and first bottom wall 48c extending from an end of the first end wall 48a in the opening end side to the bottom wall 16b in the axial direction and having a first width of W1 in the circumferential direction. In the present embodiment, the first bottom wall 48c is structured as a part of the peripheral wall 16a of the first bracket 16.

The first outflow port OP1 and the second outflow port OP2 are formed in the first end wall 48a. The first outflow port OP1 and the second outflow port OP2 2 are long holes extending in the circumferential direction and have a predetermined width (<W1) in the circumferential direction. The first outflow port OP1 is located in the side of the opening end of the peripheral wall 16a, and the second outflow port OP2 is located radially outward from the first outflow port OP1.

The flow path formation convexity 48 includes a first partition wall 48d located between the pair of first side walls 48b and extending axially from the radial midpoint of the first end wall 48a to the bottom wall 16b while being opposed to the first bottom wall 48c with a gap therebetween in the radial direction, and a first roof wall 48e located between the pair of the first side walls 48b and extending axially from the end of the extending side of the first end wall 48a to the bottom wall 16b while being opposed to the first partition wall 48d with a gap therebetween in the radial direction. The first partition wall 48d and the first roof wall 48e each have a first width W1 in the circumferential direction. The end of the bottom wall 16b side of the first roof wall 48e is connected to the end of the first partition wall 48d in the bottom wall 16b side.

As in FIG. 9, the first bottom wall 48c includes a first inflow port IP1 and a second inflow port IP2 formed therein. The first inflow port IP1 is located adjacent to the bottom wall 16b. The first inflow port IP1 is a long hole extending in the circumferential direction and has a second width W2 in the circumferential direction. The second width W2 is slightly smaller than the first width W1 the first bottom wall 48c. The second inflow port IP2 is located in the side of the first end wall 48a with respect to the first inflow port IP2 and adjacent to one of the side walls 48b. The second inflow port IP2 is a long hole extending in the circumferential direction extending from one of the side walls 48b to the other side wall 48b and has a circumferential third width W3. The third width W3 is smaller than the second width W2, for example, about 1/2 of the first width W1.

As in FIGS. 10 and 11, through port CP1 is formed in the first partition wall 48d. Through port CP1 is located to be opposed to the second inflow port IP2 in the radial direction. The through port CP1 is a long hole extending in the circumferential direction from one side wall 48b to the other side wall 48b, and has a third width W3 in the circumferential direction.

The flow path formation convexity 48 includes a cylindrical second partition wall 48f extending in the radial direction between the first bottom wall 48c and the first partition wall. One end of the second partition wall 48f connects to the first bottom wall 48c and is located around the second inflow port IP2, and the other end of the second partition wall 48f is connected to the first partition wall 48d and is located around the through port CP1. In the present embodiment, part of the second partition wall 48f is formed by the side wall 48b. The inner surface of the second partition wall 48f defines a flow path connecting the second inflow port IP2 and the through port CP1.

In the flow path formation convexity 48 of the above structure, the first bottom wall 48c, first partition wall 48d, a pair of first side walls 48b, and second partition wall 48f define a first external air flow path RA connecting the first inflow port IP1 and the first outflow port OP1. The first partition wall 48d, first roof wall 48e, a pair of first side walls 48b, and second partition wall 48f define a first internal air flow path IR connecting the second inflow port IP2 and the second outflow port OP2.

As in FIG. 5, the four flow path forming convexities 48 of the first bracket 16 are arranged at regular intervals in the circumferential direction, for example, 90 degrees apart. Un the present embodiment, one flow path formation convexity 48 is formed such that the narrow portion WS of the first external air flow path RA is positioned adjacent to one side wall 48b while another flow path formation convexity 48 adjacent thereto in the circumferential direction is formed such that the narrow portion WS is positioned adjacent to the other side wall 48b. That is, the two adjacent flow path formation convexities in the circumferential direction are formed symmetrically with respect to a virtual line L1 passing through the two flow path formation convexities 48 and the central axis C1.

As in FIG. 3, in a state where the first bracket 16 is fixed to the first core holder 14a, the first outflow port OP1 of each flow path formation convexity 48 is opposed to the first through port 44a of the first core holder 14a and one end of the first flow path F1 of the stator 12. Thereby, the first external air flow path RA of the flow path formation convexity 48 communicates to one end of the first flow path F1 through the first outflow port OP1 and the first through port 44a. The second outflow port OP2 of each flow path formation convexity 48 is opposed to the first through port 44b of the first core holder 14a and one end of the first flow path F2 of the stator 12. Thereby, the first internal air flow path RI of the flow path formation convexity 48 communicates to one end of the second flow path F2 through the second outflow port OP2 and the second through port 44b.

The first inflow port IP1 of each flow path formation convexity 48 opens to the outside space OA of the first bracket 16, and the first external air flow path RA is connected to the outside space OA via the first inflow port IP1. The second inflow port IP2 of each flow path formation convexity 48 opens to the inside space IA of the first bracket 16, and the first internal air flow path RI is connected to the outside space IA via the second inflow port IP2.

Next, the structure of the flow path formation convexity 58 of the second bracket 18 will be described.

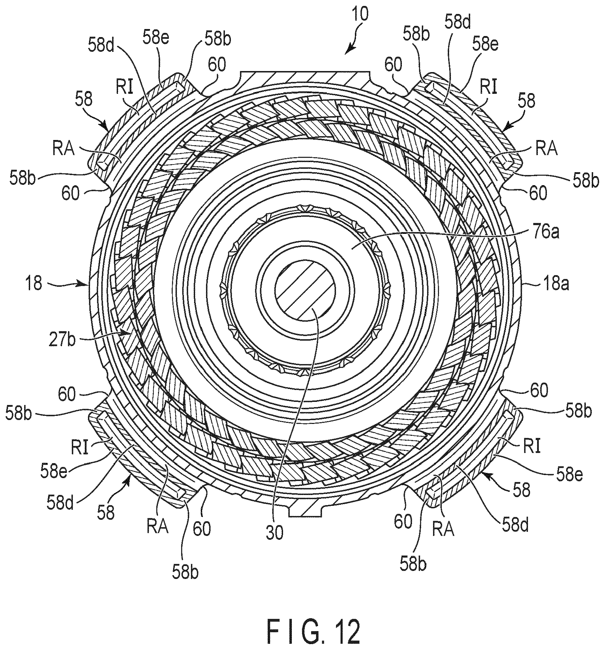

FIG. 12 is a cross-sectional view of the second bracket part, taken along line E-E of FIG. 3.

As in FIGS. 3, 7, and 12, the flow path formation convexity 58 integrally includes a second end wall 58a extending in the radial direction from an opening end of the peripheral wall 18a and having a predetermined width in the circumferential direction, a pair of second side walls 58b extending from one and other ends of the second end wall 58a in the circumferential direction to the bottom wall 18b in the axial direction and installed standing in the radial direction to be opposed to each other in the circumferential direction with a predetermined gap therebetween, second bottom wall 58c positioned between the pair of second side walls 58b and radially extending from the end of the second end wall 58a in the opening end side to the bottom wall 18b, third partition wall 58d positioned between the pair of second side walls 58b, extending in the axial direction from the second end wall 58a to the bottom wall 18b, and opposed to the second bottom wall 58c with a gap therebetween in the radial direction, second roof wall 58e positioned between the pair of second side walls 58b, extending in the axial direction from the end of the second end wall 58a in the extension side to the bottom wall, and opposed to the second partition wall with a gap therebetween in the radial direction, and fourth partition wall 58f positioned between the second bottom wall 58c and the third partition wall 58d and communicating to the second bottom wall 58c and the third partition wall 58d. The flow path formation convexity 58 includes a third inflow port IP3 formed in the second end wall 58a to be opposed to the other end of the first flow path F1, fourth inflow port IP4 formed in the second end wall 58a, positioned outward in the radial direction of the third inflow port IP3, and opposed to the other end of the second flow path F2, and discharge port 60 formed in each second side wall 58b.

As in FIG. 7, the second flow path formation convexity 58 further includes a third outflow port OP3 formed in the second bottom wall 58c and located adjacent to the bottom wall 18b, and a second through port CP2 formed in the third partition wall 58d and located adjacent to the third outflow port port OP3. The aforementioned fourth partition wall 58f has one end connected to the second bottom wall 58c between the discharge port 60 and the third outflow port OP3, and the other end connected to the third partition wall 58d between the discharge port 60 and the second through port CP2, and defines a flow path connecting the second through port CP2 and the third outflow port OP3.

The second bottom wall 58c, third partition wall 58d, a pair of second side walls 58b, and fourth partition wall 58f form a second external air flow path RA connecting the third inflow port IP3 and the discharge port 60. The second external air flow path RA extends from the third inflow port IP3 to the fourth partition wall 58f in the axial direction between the second bottom wall 58c and the third partition wall 58d to be connected to the discharge port 60 formed in the pair of second side walls 58b.

The third partition wall 58d, second roof wall 58e, fourth partition wall 58f, and a pair of second side walls 58b form the second internal air flow path RI connecting the third outflow port OP3 and the fourth inflow port IP4. The second internal air flow path RI extends from the fourth inflow port IP4 to the vicinity of the bottom wall 18b in the axial direction between the third partition wall 58d and the second roof wall 58e, and further extends to reach the third outflow port OP3 through the second through port CP2. The width of the second external air flow path RA in the circumferential direction and the width of the second internal air flow path RI in the circumferential direction are formed to be substantially equal to the width of the flow path formation convexity 58 in the circumferential direction.

As in FIG. 3, in a state where the second bracket 18 is fixed to the second core holder 14b, the third inflow port IP3 of each flow path formation convexity 58 is opposed to the first through port 44a of the second core holder 14b and the other end of the first flow path F1 of the stator 12. Thereby, the second external air flow path RA of the flow path formation convexity 58 communicates to the other end of the first flow path F1 through the third inflow port IP3 and the first through port 44a. The fourth inflow port IP4 of each flow path formation convexity 58 is opposed to the second through port 44b of the second core holder 14b and the other end of the second flow path F2 of the stator 12. Thereby, the second internal air flow path RI of the flow path formation convexity 58 communicates to the other end of the second flow path F2 through the fourth inflow port IP4 and the second through port 44b. The third outflow port OP3 of each flow path formation convexity 58 opens to the outside space OA of the second bracket 18, and the second external air flow path RA communicates to the outside space OA through the third outflow port OP3.

The operation and cooling effect of the rotating electrical machine 10 structured as above will be explained.

As in FIG. 3, when the rotary electric machine 10 is in operation, the stator coil 26 is energized and the rotor 28 rotates around the center axis C1. At that time, the stator coil 26 and the permanent magnet M generate heat, which is transferred to each component in the rotary electric machine 10, causing the temperature to rise. The first fan FA and the second fan FB are rotated around the central axis C1 in unison with the rotation shaft 30 of the rotor 28.

Note that, in FIG. 3, the solid arrows indicate the flow of outside air and the hollow arrows indicate the flow of inside air. When the first fan FA rotates, the outer blade 74 causes air flow in the outside space OA of the first bracket 16. This causes outside air to be sucked into the outside space OA through the intake port 55 disposed in the bottom wall 16b. The flowing-in outside air, i.e., cooling air, flows around the first bearing B1 and then flows radially in the outside space OA along the fan main body 70a and the bottom wall 16b, and part thereof flows into the first external air flow path RA from the first inflow port IP1 of each flow path formation convexity 48. The cooling air flows into the first flow path F1 of the stator 12 through the first external air flow path RA, and after flowing through the first flow path RA, the cooling air flows into the second external air flow path RA of the second bracket 18. After flowing through the second external air flow path RA, the cooling air is exhausted from the discharge port 60 to the outside of the machine.

The cooling air introduced into the outside space OA from the intake port 55 as above cools the first bearing B1 and the fan main body 70a, and the temperature is lowered. At that time, the heat from rotor 28 and the inside space IA is transferred to the fan main body 70a, and the heat is dissipated from the fan main body 70a to the cooling air. This contributes to lowering the temperature of the rotor 28 and the inside space IA.

When the cooling air flows through the first flow path F1 of the stator 12, the cooling air is in direct contact with the outer peripheral surface of stator core 24. The heat of the stator core 24 is dissipated into the cooling air, and the stator core 24 is cooled. Since multiple first straightening ribs 42b are provided in the first flow path F1, the cooling air the cooling air is distributed almost evenly over the entire circumferential direction in the first flow path F1 without being biased to one side in the circumferential direction. At the same time, by providing the first straightening ribs 42b, the contact area between the stator core 24 and the cooling air is increased, which contributes to more efficient heat dissipation and cooling of the stator core 24.

At the same time, when the first fan FA rotates, the inner blade 73 generates an internal air flow in the inside space IA of the first bracket 16. The internal air flow passes between the inner blade 73 of the first fan FA and the inner shroud 72 and flows out in the radial direction. The outflowing internal air passes around the coil end 27a, and flows out from the second internal air flow port IP2 of the flow path formation convexity 48 to the first internal air flow path RI. The inflowing internal air flows through the first internal air flow path RI, then flows in the second flow path F2 of the stator 12, and flows through the second flow path F2. Furthermore, the internal air flows from the second flow path F2 through the second internal air flow path RI of the second bracket 18, flows into the inside space IA of the second bracket 18, flows around the coil end 27b, and then, returns to the inside space IA of the first bracket 16 through magnet embedded holes (inner periphery side gap 50a, outer periphery side gap 50b) 50 of the rotor core 32 and a gap (air gap) between the rotor core 32 and the stator core 24.

While flowing through the internal air flow path RI of the bracket 16, the internal air is cooled through the partition wall by the external air flowing through the first external air flow path RA, and the temperature is lowered. Furthermore, while flowing through the second flow path F2 of the stator 12, the internal air is dissipated through the cover plate 20 to the outside the machine, and the temperature is lowered. At the same time, the internal air is cooled through the main rib 42a by the cooling air flowing in the first flow path F1, and the temperature is lowered. The second flow path F2 is provided with a plurality of second straightening ribs 42c, and thus, the internal air is not biased to one side of the circumferential direction in the second flow path F2, and is distributed almost evenly over the entire circumferential direction. At the same time, by providing the second straightening ribs 42c, the contact area of the ribs on the stator core 24 side becomes larger, which contributes to more efficient heat dissipation and cooling of the internal air. By circulating the lower-temperature internal air in the machine as described above, the heat of the stator coil 26, stator core 24, rotor core 32, and permanent magnet M can be dissipated to the internal air, and the above components can be cooled.

On the other hand, when the second fan FB rotates, the outer blade 78 and the outer shroud 77 generate an air flow in the outside space OA of the second bracket 18. As a result, outside air is sucked into the outside space OA through the intake port 65 on the bottom wall 18b. The flowing-in outside air, i.e., cooling air, flows around the second bearing B2 and along the outer surface of the fan main body 76a, and then flows out of the machine through the discharge port of the bottom wall 18b.

The cooling air introduced into the outside space OA cools the second bearing B2 and the fan main body 76a and the temperature is lowered. At that time, the heat from the rotor 28 and the inside space IA is transferred to the fan main body 76a, and the heat is dissipated from the fan main body 76a to the cooling air. This contributes to lowering the temperature of the rotor 28 and the inside space IA.

According to the rotary electric machine of the present embodiment configured as above, the first flow path F1 provided in contact with the outer peripheral surface of the stator core 24 and the second flow path F2 provided to cover the outer periphery side of the first flow path F1 in the radial direction are formed, and therein, the external air flows through the first flow path F1 and the internal air flow through the second flow path F2. Therefore, the stator core 24 can be efficiently cooled by the external air, and the heat of the internal air flowing through the second flow path F2 can be dissipated to the outside of the machine while the internal air being cooled by the external air. By circulating the cooled internal air in the rotary electric machine, it can contribute to cooling the stator coil, rotor core, permanent magnet, etc., in the machine.

The first flow path F1 of the stator 12 is structured by the flow path formation part 40 including the rib 42 formed integrally with the electromagnetic steel plates P1 of the stator core 24. Thus, there is no need to provide an independent ventilation duct or the like on the outer periphery side of the stator, which enables the number of parts to be reduced and the size of the rotary electric machine to be miniaturized.

Furthermore, the first bracket 16 includes a plurality of flow path formation convexities 48, and in each flow path formation convexity 48, an external air flow path RA connecting to the first flow path F1 of the stator 12 and an internal air flow path path RI connecting to the first flow path F1 of the stator 12 are formed. That is, the first bracket 16 integrally includes a plurality of external air flow paths RA and a plurality of internal air flow paths RI. Similarly, the second bracket 18 integrally includes a plurality of external air flow paths RA and a plurality of internal air flow paths RI. Therefore, there is no need to provide independent ventilation ducts, etc., in the first and second brackets, which enables the number of parts to be reduced and the size of the rotary electric machine to be miniaturized.

As can be understood from the above, the present embodiment can present a totally enclosed rotary electric machine with improved cooling capacity and miniaturization.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims are intended to cover such forms or modifications as would fall within the scope of the inventions.

For example, in the above-described embodiment, flow path formation parts of stator are provided at four locations in the outer periphery of the stator core; however, two, three, or five or more flow path formation parts may be adopted. Depending on the number of flow path formation parts, the number of flow path formation convexities on the first and second brackets will be increased or decreased. The rotary electric machine of the present invention is not limited to a permanent magnet type rotary electric machine, but may also be applied to an induction rotary electric machine with a cage type rotor.

## Claims

1. A rotary electric machine **characterized by** comprising:
a stator (12) including a cylindrical stator core (24) with a first end surface positioned at one end of an axial direction and a second end surface positioned at the other end of the axial direction, and an outer peripheral surface, a stator coil (26) attached to the stator core, and a first flow path formation part (40) provided on an outer periphery of the stator core, forming a first flow path (F1) extending from one end of the stator core to the other end thereof in the axial direction and a second flow path (F2) positioned outside the first flow path in a radial direction of the stator core while extending from one end of the stator core to the other end thereof in the axial direction;
a first bracket (16) including an annular peripheral wall (16a) with an opening end opposed to the first end surface, a bottom wall (16b) opposed to the first end surface with a gap therebetween, and a second flow path formation part (48) which is formed as a part of the peripheral wall; and
a second bracket (18) including an annular peripheral wall (18a) with an opening end opposed to the second end surface, and a bottom wall (18b) opposed to the second end surface with a gap therebetween, wherein
the second flow path formation part (48) of the first bracket (16) comprises:
a first end wall (48a) extending from the opening end of the peripheral wall in a radial direction and having a width in a circumferential direction;
a pair of first side walls (48b) extending each of one and other ends of the first end wall in the circumferential direction to the bottom wall in the axial direction while being installed standing in the radial direction and opposed to each other in the circumferential direction with a gap therebetween;
a first bottom wall (48c) positioned between the pair of first side walls, extending from an end of the first end wall in the opening end side to the bottom wall in the axial direction, and having a first width in the circumferential direction;
a first partition wall (48d) positioned between the pair of first side walls, extending from the first end wall to the bottom wall in the axial direction, having a first width in the circumferential direction, and opposed to the first bottom wall with a gap therebetween in the radial direction;
a first roof wall (48e) positioned between the pair of first side walls, extending from an end of extension side of the first end wall to the bottom wall in the axial direction, having a first width in the circumferential direction, and opposed to the first partition wall with a gap therebetween in the radial direction;
a first outflow port (OP1) formed in the first end wall, having a predetermined width in the circumferential direction, and opposed to one end of the first flow path;
a second outflow port (OP2) formed in the first end wall, having a predetermined width in the circumferential direction, positioned outside the radial direction with respect to the first outflow port, and opposed to one end of the second flow path;
a first inflow port (IP1) formed in the first bottom wall, positioned to be adjacent to the bottom wall, and having a first width in the circumferential direction;
a second inflow port (IP2) formed in the first bottom wall, positioned in the first end wall side with respect to the first inflow port, and having a second width in the circumferential direction, which is smaller than the first width;
a through port (CP1) formed in the first partition wall, opposed to the second inflow port, and having a third width in the circumferential direction, which is smaller than the first width; and
a cylindrical second partition wall (48f) positioned between the first bottom wall and the first partition wall, and having one end connected to the first bottom wall and positioned around the second inflow port and the other end connected to the first partition wall and positioned around the through port, wherein
an external air flow path (RA), communicating the first inflow port with the first outflow port, is defined by the first bottom wall, the first partition wall, the pair of first side walls, and the second partition wall, and
an internal air flow path (RI), communicating the second inflow port with the second outflow port, is defined by the first partition wall, the first roof wall, the pair of first side walls, and the second partition wall.

2. The rotary electric machine of claim 1,
**characterized in that**
the second bracket (18) includes a third flow path formation part (58) formed as a part of the peripheral wall, and
the third flow path formation part (58) comprises:
a second end wall (58a) extending from the opening end of the peripheral wall in the radial direction and having a predetermined width in the circumferential direction;
a third inflow port (IP3) formed in the second end wall and opposed to the other end of the first flow path;
a fourth inflow port (IP4) formed in the second end wall, positioned outside the radial direction of the third inflow port, and opposed to the other end of the second flow path;
a pair of second side walls (58b) extending each of one and other ends of the first end wall in the circumferential direction to the bottom wall in the axial direction while being installed standing in the radial direction and opposed to each other in the circumferential direction with the first width therebetween;
a discharge port (60) formed in at least one of the second side walls;
a second bottom wall (58c) positioned between the pair of second side walls, and extending from the end of the second end wall in the opening end side to the bottom wall in the axial direction;
a third partition wall (58d) positioned between the pair of second side walls, extending from the second end wall to the bottom wall in the axial direction, and opposed to the second bottom wall with a gap therebetween in the radial direction;
a second roof wall (58e) positioned between the pair of second side walls, extending from the end of the second end wall in the extension side to the bottom wall, and opposed to the second partition wall with a gap therebetween in the radial direction;
a third outflow port (OP3) formed in the second bottom wall and positioned adjacent to the bottom wall;
a second through port (CP2) formed in the third partition wall and opposed to the third inflow port; and
a fourth partition wall (58f) positioned between the second bottom wall and the second partition wall, and having one end connected to the second bottom wall between the discharge port and the third outflow port and the other end connected to the third partition wall between the discharge port and the second through port, wherein
an external air flow path (RA), communicating the third inflow port with the discharge port, is defined by the second bottom wall, the third partition wall, the pair of second side walls, and the fourth partition wall, and
an internal air flow path (RI), communicating the fourth inflow port with the third outflow port, is defined by the third partition wall, the fourth partition wall, the second roof wall, and the pair of second side walls.

3. The rotary electric machine of claim 2,
**characterized by** further comprising:
a first bearing (B1) provided at the bottom wall of the first bracket (16) and a second bearing (B2) provided at the bottom wall of the second bracket (18);
a rotor (28) comprising a rotation shaft (30) arranged coaxially with the stator core and supported by the first bearing and the second bearing to be rotatable about a central axis, and a rotor core (32) attached to the rotation shaft and disposed inside and coaxially with the stator core;
a first fan (FA) attached to the rotation shaft between the first bearing and the rotor core, and integrally rotatable with the rotation shaft; and
a second fan (FB) attached to the rotation shaft between the second bearing and the rotor core, and integrally rotatable with the rotation shaft, wherein
the first fan includes:
a fan main body (70a) fixed to the rotation shaft, and partitioning an inner space of the first bracket into an outside space, which is defined between the bottom wall and the first fan and communicates with the first inflow port and an intake port formed in the bottom wall, and an inside space, which is defined between the stator core and rotor core and the first fan and communicates with the second inflow port;
a plurality of outer blades (74) provided at an outer surface of the fan main body and positioned in the outside space; and
a plurality of inner blades (73) provided at an inner surface of the fan main body and positioned in the inside space.

4. The rotary electric machine of claim 3,
**characterized in that**
the second fan (FB) includes a fan main body (76a) fixed to the rotation shaft, and partitioning an inner space of the second bracket into an outside space, which is defined between the bottom wall and the second fan and communicates with an intake port formed in the bottom wall, and an inside space, which is defined between the stator core and rotor core and the second fan and communicates with the third outflow port, and
a plurality of outer blades (78) provided at an outer surface of the fan main body and positioned in the outside space.

5. The rotary electric machine of claim 1,
**characterized in that**
the stator core (24) is a layered core including a plurality of magnetic steel plates layered concentrically,
the first flow path formation part (40) includes a rib (42) formed integrally with an outer peripheral edge of each magnetic steel plate, and
the rib (42) includes a main rib (42a) extending from the outer peripheral edge of the magnetic steel plate in the outer radial direction and defining the first flow path between the outer peripheral edge and the main rib, a plurality of first straightening ribs (42b) located between the main rib and the outer peripheral edge and disposed to be apart from each other in the circumferential direction, and a plurality of second straightening ribs (42) extending from an outer edge of the main rib in the outer radial direction.

6. The rotary electric machine of claim 5,
**characterized in that**
the first straightening ribs (42b) are positioned in the first flow path and constitute straightening plates extending from one end to the other end of the stator core in the axial direction.

7. The rotary electric machine of claim 6,
**characterized in that**
the first flow path formation part (40) includes a cover plate (20) fixed to the outer peripheral surface of the stator core and covering the rib (42),
the second flow path (F2) is defined between an outer edge of the main rib (42a) and an inner surface of the cover plate, and
the second straightening ribs (42c) are positioned in the second flow path and constitute straightening plates extending from one end to the other end of the stator core in the axial direction.

## Patentansprüche

1. Elektrische Drehmaschine, **dadurch gekennzeichnet, dass** sie umfasst:
einen Stator (12), der einen zylindrischen Statorkern (24) mit einer ersten Endfläche, die an einem Ende einer axialen Richtung positioniert ist, und einer zweiten Endfläche, die an dem anderen Ende der axialen Richtung positioniert ist, und einer Außenumfangsfläche, eine Statorspule (26), die an dem Statorkern angebracht ist, und einen ersten Strömungsweg-Bildungsteil (40) umfasst, der an einem Außenumfang des Statorkerns bereitgestellt ist, einen ersten Strömungsweg (F1), der sich von einem Ende des Statorkerns zum anderen Ende davon in der axialen Richtung erstreckt, und einen zweiten Strömungsweg (F2) bildet, der außerhalb des ersten Strömungswegs in einer radialen Richtung des Statorkerns positioniert ist und sich dabei von einem Ende des Statorkerns zum anderen Ende davon in der axialen Richtung erstreckt;
einen ersten Träger (16), der eine ringförmige Umfangswand (16a) mit einem Öffnungsende entgegengesetzt zur ersten Endfläche, eine untere Wand (16b) entgegengesetzt zur ersten Endfläche mit einem Spalt dazwischen und einen zweiten Strömungsweg-Bildungsteil (48) umfasst, der als ein Teil der Umfangswand gebildet ist; und
einen zweiten Träger (18), der eine ringförmige Umfangswand (18a) mit einem Öffnungsende entgegengesetzt zur zweiten Endfläche und eine untere Wand (18b) umfasst, die der zweiten Endfläche mit einem Spalt dazwischen entgegengesetzt ist, wobei
der zweite Strömungsweg-Bildungsteil (48) des ersten Trägers (16) umfasst:
eine erste Endwand (48a), die sich von dem Öffnungsende der Umfangswand in einer radialen Richtung erstreckt und eine Breite in einer Umfangsrichtung aufweist;
ein Paar erste Seitenwände (48b), die sich jeweils von jedem von einem und anderen Enden der ersten Endwand in der Umfangsrichtung zur unteren Wand in der axialen Richtung erstrecken und dabei in der radialen Richtung stehend und entgegengesetzt zueinander in der Umfangsrichtung mit einem Spalt dazwischen eingerichtet sind;
eine erste untere Wand (48c), die zwischen dem Paar erste Seitenwände positioniert ist, sich von einem Ende der ersten Endwand in der Seite des Öffnungsendes zur unteren Wand in der axialen Richtung erstreckt und eine erste Breite in der Umfangsrichtung aufweist;
eine erste Trennwand (48d), die zwischen dem Paar erste Seitenwände positioniert ist, sich von der ersten Endwand zur unteren Wand in der axialen Richtung erstreckt, eine erste Breite in der Umfangsrichtung aufweist und der ersten unteren Wand mit einem Spalt dazwischen in der radialen Richtung entgegengesetzt ist;
eine erste Dachwand (48e), die zwischen dem Paar erste Seitenwände positioniert ist, sich von einem Ende der Erstreckungsseite der ersten Endwand zur unteren Wand in der axialen Richtung erstreckt, eine erste Breite in der Umfangsrichtung aufweist und der ersten Trennwand mit einem Spalt dazwischen in der radialen Richtung entgegengesetzt ist;
eine erste Ausströmungsöffnung (OP1), die in der ersten Endwand gebildet ist, eine vorbestimmte Breite in der Umfangsrichtung aufweist und einem Ende des ersten Strömungswegs entgegengesetzt ist;
eine zweite Ausströmungsöffnung (OP2), die in der ersten Endwand gebildet ist, eine vorbestimmte Breite in der Umfangsrichtung aufweist, außerhalb der radialen Richtung in Bezug auf die erste Ausströmungsöffnung positioniert und einem Ende des zweiten Strömungswegs entgegengesetzt ist;
eine erste Einströmungsöffnung (IP1), die in der ersten unteren Wand gebildet ist, positioniert ist, um der unteren Wand benachbart zu sein, und eine erste Breite in der Umfangsrichtung aufweist;
eine zweite Einströmungsöffnung (IP2), die in der ersten unteren Wand gebildet ist, in der Seite der ersten Endwand in Bezug auf die erste Einströmungsöffnung positioniert ist und eine zweite Breite in der Umfangsrichtung aufweist, die kleiner als die erste Breite ist;
eine Durchgangsöffnung (CP1), die in der ersten Trennwand gebildet ist, entgegengesetzt zur zweiten Einströmungsöffnung ist und eine dritte Breite in der Umfangsrichtung aufweist, die kleiner als die erste Breite ist; und
eine zylindrische zweite Trennwand (48f), die zwischen der ersten unteren Wand und der ersten Trennwand positioniert ist und ein Ende, das mit der ersten unteren Wand verbunden ist und um die zweite Einströmungsöffnung positioniert ist, und das andere Ende aufweist, das mit der ersten Trennwand verbunden ist und um die Durchgangsöffnung positioniert ist, wobei
ein Außenluft-Strömungsweg (RA), der die erste Einströmungsöffnung mit der ersten Ausströmungsöffnung verbindet, durch die erste untere Wand, die erste Trennwand, das Paar erste Seitenwände und die zweite Trennwand definiert ist, und
ein Innenluft-Strömungsweg (RI), der die zweite Einströmungsöffnung mit der zweiten Ausströmungsöffnung verbindet, durch die erste Trennwand, die erste Dachwand, das Paar erste Seitenwände und die zweite Trennwand definiert ist.

2. Elektrische Drehmaschine nach Anspruch 1, **dadurch gekennzeichnet, dass**
der zweite Träger (18) einen dritten Strömungsweg-Bildungsteil (58) umfasst, der als ein Teil der Umfangswand gebildet ist, und
der dritte Strömungsweg-Bildungsteil (58) umfasst:
eine zweite Endwand (58a), die sich von dem Öffnungsende der Umfangswand in der radialen Richtung erstreckt und eine vorbestimmte Breite in der Umfangsrichtung aufweist;
eine dritte Einströmungsöffnung (IP3), die in der zweiten Endwand und entgegengesetzt zu dem anderen Ende des ersten Strömungswegs gebildet ist;
eine vierte Einströmungsöffnung (IP4), die in der zweiten Endwand gebildet ist, außerhalb der radialen Richtung der dritten Einströmungsöffnung positioniert ist und entgegengesetzt zum anderen Ende des zweiten Strömungswegs ist;
ein Paar zweite Seitenwände (58b), die sich jeweils von einem und anderen Enden der ersten Endwand in der Umfangsrichtung zur unteren Wand in der axialen Richtung erstrecken und dabei in der radialen Richtung stehend und entgegengesetzt zueinander in der Umfangsrichtung mit der ersten Breite dazwischen eingerichtet sind;
eine Auslassöffnung (60), die in mindestens einer der zweiten Seitenwände gebildet ist;
eine zweite untere Wand (58c), die zwischen dem Paar zweite Seitenwände positioniert ist und sich von dem Ende der zweiten Endwand in der Seite des Öffnungsendes zur unteren Wand in der axialen Richtung erstreckt;
eine dritte Trennwand (58d), die zwischen dem Paar zweite Seitenwände positioniert ist, sich von der zweiten Endwand zur unteren Wand in der axialen Richtung erstreckt und der zweiten unteren Wand mit einem Spalt dazwischen in der radialen Richtung entgegengesetzt ist;
eine zweite Dachwand (58e), die zwischen dem Paar zweite Seitenwände positioniert ist, sich von dem Ende der zweiten Endwand in der Erstreckungsseite zur unteren Wand erstreckt und der zweiten Trennwand mit einem Spalt dazwischen in der radialen Richtung entgegengesetzt ist;
eine dritte Ausströmungsöffnung (OP3), die in der zweiten unteren Wand gebildet ist und benachbart zu der unteren Wand positioniert ist;
eine zweite Durchgangsöffnung (CP2), die in der dritten Trennwand gebildet ist und der dritten Einströmungsöffnung entgegengesetzt ist; und
eine vierte Trennwand (58f), die zwischen der zweiten unteren Wand und der zweiten Trennwand positioniert ist und ein Ende, das mit der zweiten unteren Wand zwischen der Auslassöffnung und der dritten Ausströmungsöffnung verbunden ist, und das andere Ende aufweist, das mit der dritten Trennwand zwischen der Auslassöffnung und der zweiten Durchgangsöffnung verbunden ist, wobei
ein Außenluft-Strömungsweg (RA), der die dritte Einströmungsöffnung mit der Auslassöffnung verbindet, durch die zweite untere Wand, die dritte Trennwand, das Paar zweite Seitenwände und die vierte Trennwand definiert ist, und
ein Innenluft-Strömungsweg (RI), der die vierte Einströmungsöffnung mit der dritten Ausströmungsöffnung verbindet, durch die dritte Trennwand, die vierte Trennwand, die zweite Dachwand und das Paar zweite Seitenwände definiert ist.

3. Elektrische Drehmaschine nach Anspruch 2, **dadurch gekennzeichnet, dass** sie ferner umfasst:
ein erstes Lager (B1), das an der unteren Wand des ersten Trägers (16) bereitgestellt ist, und ein zweites Lager (B2), das an der unteren Wand des zweiten Trägers (18) bereitgestellt ist;
einen Rotor (28), der eine Drehwelle (30), die koaxial zum Statorkern angeordnet ist und derart von dem ersten Lager und dem zweiten Lager gestützt wird, dass sie um eine Mittelachse drehbar ist, und einen Rotorkern (32) umfasst, der an der Drehwelle angebracht ist und im Inneren des Statorkerns und koaxial dazu angeordnet ist;
ein erstes Gebläse (FA), das an der Drehwelle zwischen dem ersten Lager und dem Rotorkern angebracht ist und einteilig mit der Drehwelle drehbar ist; und
ein zweites Gebläse (FB), das an der Drehwelle zwischen dem zweiten Lager und dem Rotorkern angebracht ist und einteilig mit der Drehwelle drehbar ist, wobei
das erste Gebläse umfasst:
einen Gebläsehauptkörper (70a), der an der Drehwelle befestigt ist und einen Innenraum des ersten Trägers in einen äußeren Raum, der zwischen der unteren Wand und dem ersten Gebläse definiert ist und mit der ersten Einströmungsöffnung und einer Einlassöffnung verbunden ist, die in der unteren Wand gebildet ist, und einen inneren Raum trennt, der zwischen dem Statorkern und Rotorkern und dem ersten Gebläse definiert ist und mit der zweiten Einströmungsöffnung verbunden ist;
mehrere Außenblätter (74), die an einer Außenfläche des Gebläsehauptkörpers bereitgestellt sind und in dem äußeren Raum positioniert sind; und
mehrere Innenblätter (73), die an einer Innenfläche des Gebläsehauptkörpers bereitgestellt sind und in dem inneren Raum positioniert sind.

4. Elektrische Drehmaschine nach Anspruch 3, **dadurch gekennzeichnet, dass**
das zweite Gebläse (FB) einen Gebläsehauptkörper (76a) umfasst, der an der Drehwelle befestigt ist und einen Innenraum des zweiten Trägers in einen äußeren Raum, der zwischen der unteren Wand und dem zweiten Gebläse definiert ist und mit einer Einlassöffnung verbunden ist, die in der unteren Wand gebildet ist, und einen inneren Raum trennt, der zwischen dem Statorkern und Rotorkern und dem zweiten Gebläse definiert ist und mit der dritten Ausströmungsöffnung verbunden ist, und
mehrere Außenblätter (78) an einer Außenfläche des Gebläsehauptkörpers bereitgestellt sind und in dem äußeren Raum positioniert sind.

5. Elektrische Drehmaschine nach Anspruch 1, **dadurch gekennzeichnet, dass**
der Statorkern (24) ein geschichteter Kern ist, der mehrere magnetische Stahlplatten umfasst, die konzentrisch geschichtet sind,
der erste Strömungsweg-Bildungsteil (40) eine Rippe (42) umfasst, die einteilig mit einem Außenumfangsrand von jeder magnetischen Stahlplatte gebildet ist, und
die Rippe (42) eine Hauptrippe (42a), die sich von dem Außenumfangsrand der magnetischen Stahlplatte in der äußeren radialen Richtung erstreckt und den ersten Strömungsweg zwischen dem Außenumfangsrand und der Hauptrippe definiert, mehrere erste Richtrippen (42b), die sich zwischen der Hauptrippe und dem Außenumfangsrand befinden und angeordnet sind, um in der Umfangsrichtung voneinander getrennt zu sein, und mehrere zweite Richtrippen (42) umfasst, die sich von einem äußeren Rand der Hauptrippe in der äußeren radialen Richtung erstrecken.

6. Elektrische Drehmaschine nach Anspruch 5, **dadurch gekennzeichnet, dass**
die ersten Richtrippen (42b) in dem ersten Strömungsweg positioniert sind und Richtplatten bilden, die sich von einem Ende des Statorkerns in der axialen Richtung zum anderen Ende erstrecken.

7. Elektrische Drehmaschine nach Anspruch 6, **dadurch gekennzeichnet, dass**
der erste Strömungsweg-Bildungsteil (40) eine Abdeckplatte (20) umfasst, die an der Außenumfangsfläche des Statorkerns befestigt ist und die Rippe (42) abdeckt,
der zweite Strömungsweg (F2) zwischen einem Außenrand der Hauptrippe (42a) und einer Innenfläche der Abdeckplatte definiert ist, und
die zweiten Richtrippen (42c) in dem zweiten Strömungsweg positioniert sind und Richtplatten bilden, die sich von einem Ende zum anderen Ende des Statorkerns in der axialen Richtung erstrecken.

## Revendications

1. Machine tournante électrique **caractérisée en ce qu'**elle comprend :
un stator (12) incluant un noyau de stator cylindrique (24) avec une première surface d'extrémité positionnée à une extrémité d'une direction axiale et une deuxième surface d'extrémité positionnée à l'autre extrémité de la direction axiale, et une surface périphérique extérieure, une bobine de stator (26) attachée au noyau de stator, et une première partie de formation de trajet d'écoulement (40) prévue sur une périphérie extérieure du noyau de stator, formant un premier trajet d'écoulement (F1) s'étendant depuis une extrémité du noyau de stator jusqu'à l'autre extrémité de celui-ci dans la direction axiale et un deuxième trajet d'écoulement (F2) positionné à l'extérieur du premier trajet d'écoulement dans une direction radiale du noyau de stator tout en s'étendant depuis une extrémité du noyau de stator jusqu'à l'autre extrémité de celui-ci dans la direction axiale ;
un premier support (16) incluant une paroi périphérique annulaire (16a) avec une extrémité d'ouverture opposée à la première surface d'extrémité, une paroi inférieure (16b) opposée à la première surface d'extrémité avec un espacement entre elles, et une deuxième partie de formation de trajet d'écoulement (48) qui est formée en faisant partie de la paroi périphérique ; et
un deuxième support (18) incluant une paroi périphérique annulaire (18a) avec une extrémité d'ouverture opposée à la deuxième surface d'extrémité, et une paroi inférieure (18b) opposée à la deuxième surface d'extrémité avec un espacement entre elles, dans laquelle
la deuxième partie de formation de trajet d'écoulement (48) du premier support (16) comprend :
une première paroi d'extrémité (48a) s'étendant depuis l'extrémité d'ouverture de la paroi périphérique dans une direction radiale et présentant une largeur dans une direction circonférentielle ;
une paire de premières parois latérales (48b) s'étendant depuis chacune de l'une et de l'autre extrémités de la première paroi d'extrémité dans la direction circonférentielle jusqu'à la paroi inférieure dans la direction axiale tout en étant installées droites dans la direction radiale et opposées l'une à l'autre dans la direction circonférentielle avec un espacement entre elles ;
une première paroi inférieure (48c) positionnée entre la paire de premières parois latérales, s'étendant depuis une extrémité de la première paroi d'extrémité dans le côté d'extrémité d'ouverture jusqu'à la paroi inférieure dans la direction axiale, et présentant une première largeur dans la direction circonférentielle ;
une première cloison de séparation (48d) positionnée entre la paire de premières parois latérales, s'étendant depuis la première paroi d'extrémité jusqu'à la paroi inférieure dans la direction axiale, présentant une première largeur dans la direction circonférentielle, et opposée à la première paroi inférieure avec un espacement entre elles dans la direction radiale ;
une première paroi de toit (48e) positionnée entre la paire de premières parois latérales, s'étendant depuis une extrémité d'un côté d'extension de la première paroi d'extrémité jusqu'à la paroi inférieure dans la direction axiale, présentant une première largeur dans la direction circonférentielle, et opposée à la première cloison de séparation avec un espacement entre elles dans la direction radiale ;
un premier orifice d'écoulement de sortie (OP1) formé dans la première paroi d'extrémité, présentant une largeur prédéterminée dans la direction circonférentielle, et opposé à une extrémité du premier trajet d'écoulement ;
un deuxième orifice d'écoulement de sortie (OP2) formé dans la première paroi d'extrémité, présentant une largeur prédéterminée dans la direction circonférentielle, positionné à l'extérieur de la direction radiale par rapport au premier orifice d'écoulement de sortie, et opposé à une extrémité du deuxième trajet d'écoulement ;
un premier orifice d'écoulement d'entrée (IP1) formé dans la première paroi inférieure, positionné pour être adjacent à la paroi inférieure, et présentant une première largeur dans la direction circonférentielle ;
un deuxième orifice d'écoulement d'entrée (IP2) formé dans la première paroi inférieure, positionné dans le premier côté de paroi d'extrémité par rapport au premier orifice d'écoulement d'entrée, et présentant une deuxième largeur dans la direction circonférentielle, qui est inférieure à la première largeur ;
un orifice traversant (CP1) formé dans la première cloison de séparation, opposé au deuxième orifice d'écoulement d'entrée, et présentant une troisième largeur dans la direction circonférentielle, qui est inférieure à la première largeur ; et
une deuxième cloison de séparation cylindrique (48f) positionnée entre la première paroi inférieure et la première cloison de séparation, et comportant une extrémité reliée à la première paroi inférieure et positionnée autour du deuxième orifice d'écoulement d'entrée et l'autre extrémité reliée à la première cloison de séparation et positionnée autour de l'orifice traversant, dans laquelle
un trajet d'écoulement d'air externe (RA), mettant le premier orifice d'écoulement d'entrée en communication avec le premier orifice d'écoulement de sortie, est défini par la première paroi inférieure, la première cloison de séparation, la paire de premières parois latérales et la deuxième cloison de séparation, et
un trajet d'écoulement d'air interne (RI), mettant le deuxième orifice d'écoulement d'entrée en communication avec le deuxième orifice d'écoulement de sortie, est défini par la première cloison de séparation, la première paroi de toit, la paire de premières parois latérales et la deuxième cloison de séparation.

2. Machine tournante électrique selon la revendication 1, **caractérisée en ce que**
le deuxième support (18) inclut une troisième partie de formation de trajet d'écoulement (58) formée en faisant partie de la paroi périphérique, et
la troisième partie de formation de trajet d'écoulement (58) comprend :
une deuxième paroi d'extrémité (58a) s'étendant depuis l'extrémité d'ouverture de la paroi périphérique dans la direction radiale et présentant une largeur prédéterminée dans la direction circonférentielle ;
un troisième orifice d'écoulement d'entrée (IP3) formé dans la deuxième paroi d'extrémité et opposé à l'autre extrémité du premier trajet d'écoulement ;
un quatrième orifice d'écoulement d'entrée (IP4) formé dans la deuxième paroi d'extrémité, positionné à l'extérieur de la direction radiale du troisième orifice d'écoulement d'entrée, et opposé à l'autre extrémité du deuxième trajet d'écoulement ;
une paire de deuxièmes parois latérales (58b) s'étendant depuis chacune de l'une et de l'autre extrémités de la première paroi d'extrémité dans la direction circonférentielle jusqu'à la paroi inférieure dans la direction axiale tout en étant installées droites dans la direction axiale et opposées l'une à l'autre dans la direction circonférentielle avec la première largeur entre elles ;
un orifice de décharge (60) formé dans au moins l'une des deuxièmes parois latérales ;
une deuxième paroi inférieure (58c) positionnée entre la paire de deuxièmes parois latérales, et s'étendant depuis l'extrémité de la deuxième paroi d'extrémité dans le côté d'extrémité d'ouverture jusqu'à la paroi inférieure dans la direction axiale ;
une troisième cloison de séparation (58d) positionnée entre la paire de deuxièmes parois latérales, s'étendant depuis la deuxième paroi d'extrémité jusqu'à la paroi inférieure dans la direction axiale, et opposée à la deuxième paroi inférieure avec un espacement entre elles dans la direction radiale ;
une deuxième paroi de toit (58e) positionnée entre la paire de deuxièmes parois latérales, s'étendant depuis l'extrémité de la deuxième paroi d'extrémité dans le côté d'extension jusqu'à la paroi inférieure, et opposée à la deuxième cloison de séparation avec un espacement entre elles dans la direction radiale ;
un troisième orifice d'écoulement de sortie (OP3) formé dans la deuxième paroi inférieure et positionné adjacent à la paroi inférieure ;
un deuxième orifice traversant (CP2) formé dans la troisième cloison de séparation et opposé au troisième orifice d'écoulement d'entrée ; et
une quatrième cloison de séparation (58f) positionnée entre la deuxième paroi inférieure et la deuxième cloison de séparation, et comportant une extrémité reliée à la deuxième paroi inférieure entre l'orifice de décharge et le troisième orifice d'écoulement de sortie et l'autre extrémité reliée à la troisième cloison de séparation entre l'orifice de décharge et le deuxième orifice traversant, dans laquelle
un orifice d'écoulement d'air externe (RA), mettant le troisième orifice d'écoulement d'entrée en communication avec l'orifice de décharge, est défini par la deuxième paroi inférieure, la troisième cloison de séparation, la paire de deuxièmes parois latérales et la quatrième cloison de séparation, et
un trajet d'écoulement d'air interne (RI), mettant le quatrième orifice d'écoulement d'entrée en communication avec le troisième orifice d'écoulement de sortie, est défini par la troisième cloison de séparation, la quatrième cloison de séparation, la deuxième paroi de toit et la paire de deuxièmes parois latérales.

3. Machine tournante électrique selon la revendication 2, **caractérisée en ce qu'**elle comprend en outre :
un premier palier (B1) prévu au niveau de la paroi inférieure du premier support (16) et un deuxième palier (B2) prévu au niveau de la paroi inférieure du deuxième support (18) ;
un rotor (28) comprenant un arbre de rotation (30) agencé coaxialement au noyau de stator et supporté par le premier palier et le deuxième palier pour être rotatif autour d'un axe central, et un noyau de rotor (32) attaché à l'arbre de rotation et disposé à l'intérieur de et coaxialement au noyau de stator ;
un premier ventilateur (FA) attaché à l'arbre de rotation entre le premier palier et le noyau de retour, et rotatif solidairement avec l'arbre de rotation ; et
un deuxième ventilateur (FB) attaché à l'arbre de rotation entre le deuxième palier et le noyau de rotor, et rotatif solidairement avec l'arbre de rotation, dans laquelle
le premier ventilateur inclut :
un corps principal de ventilateur (70a) fixé à l'arbre de rotation et séparant un espace intérieur du premier support en un espace externe, qui est défini entre la paroi inférieure et le premier ventilateur et qui communique avec le premier orifice d'écoulement d'entrée et un orifice d'admission formé dans la paroi inférieure, et un espace interne, qui est défini entre le noyau de stator et le noyau de rotor et le premier ventilateur et qui communique avec le deuxième orifice d'écoulement d'entrée ;
une pluralité de pales extérieures (74) prévues au niveau d'une surface extérieure du corps principal de ventilateur et positionnées dans l'espace externe ; et
une pluralité de pales intérieures (73) prévues au niveau d'une surface intérieure du corps principal de ventilateur et positionnées dans l'espace interne.

4. Machine tournante électrique selon la revendication 3, **caractérisée en ce que**
le deuxième ventilateur (FB) inclut un corps principal de ventilateur (76a) fixé à l'arbre de rotation, et séparant un espace intérieur du deuxième support en un espace externe, qui est défini entre la paroi inférieure et le deuxième ventilateur et qui communique avec un orifice d'admission formé dans la paroi inférieure, et un espace interne, qui est défini entre le noyau de stator et le noyau de rotor et le deuxième ventilateur et qui communique avec le troisième orifice d'écoulement de sortie, et
une pluralité de pales extérieures (78) prévues au niveau d'une surface extérieure du corps principal de ventilateur et positionnées dans l'espace externe.

5. Machine tournante électrique selon la revendication 1, **caractérisée en ce que**
le noyau de stator (24) est un noyau stratifié incluant une pluralité de plaques d'acier magnétiques stratifiées concentriquement,
la première partie de formation de trajet d'écoulement (40) inclut une nervure (42) formée d'un seul tenant avec un bord périphérique extérieur de chaque plaque d'acier magnétique, et
la nervure (42) inclut une nervure principale (42a) s'étendant depuis le bord périphérique extérieur de la plaque d'acier magnétique dans la direction radiale extérieure et définissant le premier trajet d'écoulement entre le bord périphérique extérieur et la nervure principale, une pluralité de premières nervures de redressement (42b) situées entre la nervure principale est le bord périphérique extérieur et disposées pour être à l'écart l'une de l'autre dans la direction circonférentielle, et une pluralité de deuxièmes nervures de redressement (42) s'étendant depuis un bord extérieur de la nervure principale dans la direction radiale extérieure.

6. Machine tournante électrique selon la revendication 5, **caractérisée en ce que**
les premières nervures de redressement (42b) sont positionnées dans le premier trajet d'écoulement et constituent des plaques de redressement s'étendant depuis une extrémité jusqu'à l'autre extrémité du noyau de stator dans la direction axiale.

7. Machine tournante électrique selon la revendication 6, **caractérisée en ce que**
la première partie de formation de trajet d'écoulement (40) inclut une plaque de recouvrement (20) fixée à la surface périphérique extérieure du noyau de stator et recouvrant la nervure (42),
le deuxième trajet d'écoulement (F2) est défini entre un bord extérieur de la nervure principale (42a) et une surface intérieure de la plaque de recouvrement, et
les deuxièmes nervures de redressement (42c) sont positionnées dans le deuxième trajet d'écoulement et constituent des plaques de redressement s'étendant depuis une extrémité jusqu'à l'autre extrémité du noyau de stator dans la direction axiale.
